# EUROPEAN PATENT SPECIFICATION

(11) **EP 2 458 255 B1**
(45) Date of publication and mention of the grant of the patent: **22.07.2015**
(21) Application number: 10802099.1
(22) Date of filing: 01.02.2010
(51) Int. Cl.: F16L 55/00, G01N 21/81, G01N 31/22, F16L 37/091

(54) **CONNECTION JOINT**
ANSCHLUSSVERBINDUNGSSTÜCK
JOINT DE RACCORDEMENT

(30) Priority: 24.07.2009 JP 2009173280
(43) Date of publication of application: 30.05.2012
(73) Proprietor: Koganei Corporation, Koganei-shi Tokyo 184-8533 (JP)
(72) Inventor: SAKAI, Hiraku, Koganei-shi Tokyo 184-8533 (JP)
(74) Representative: Vogel, Andreas
(86) International application number: PCT/JP2010/051358
(87) International publication number: WO 2011/010478

(56) References cited:
- JP-A- 2006 297 221
- JP-A- 2007 029 794
- JP-A- 2007 292 669
- US-A- 2 994 295
- US-A- 3 088 811
- US-A- 3 100 691
- US-A- 3 122 124
- US-B1- 7 540 187

## Description

### TECHNICAL FIELD

The present invention relates to a connection fitting which is used for mutual connection of air guide members such as tubes each of which guides air.

### BACKGROUND ART

A pneumatic circuit for supplying compressed air from a compressed air source to a pneumatically operated device such as a pneumatic cylinder is provided with a controlling device such as a pressure control valve for adjusting a pressure of the compressed air and a direction control valve for switching flow paths. The above-described pressure control valve and other members forming a pneumatic circuit are connected by air guide members which are connected to each other via a fitting. As the air guide members, tubes and hoses made of flexible material such as rubber or soft resin and pipes or the like made of metal, hard resin or the like are known.

As a fitting for connecting tubes as air guide members to each other, a quick fitting in which the tubes are inserted to be attached to the fitting is known, and when the tube is inserted into the fitting, a locking claw is engaged with the tube to prevent the tube from falling off. When the tube is removed from the fitting, a release ring provided to the fitting is pushed so as to release the engagement between the locking claw and the tube, so that it is possible to readily remove the tube from the fitting by pulling the tube.

Furthermore, a fitting for connecting tubes to each other is known. As this fitting, a barb-type fitting having an annular engaging protrusion provided to a hollow connection shaft with which the tube is fitted, a clamp-type fitting having a nut screwed to a fitting body for fastening the tube fitted with a hollow connection shaft, and the like are known. Patent Document 1 describes a pipe fitting device provided with a plurality of fittings for connecting tubes to each other. This fitting device is provided with a quick fitting, and barb-type and clamp-type fittings.

Patent Document 2 describes an air dryer for removing moisture from the air flowing through an air guide pipe and this air dryer is provided with a humidity indicator for detecting and indicating humidity of a secondary side air obtained by removal of the moisture.

### PRIOR ART DOCUMENTS

### PATENT DOCUMENTS

Patent Document 1: Japanese Patent Application Laid-Open Publication No. 2007-56971
Patent Document 2: Japanese Patent Application Laid-Open Publication No. 2007-29794

Patent document US 3 122 124 also discloses a known fluid moisture indicator.

### DISCLOSURE OF THE INVENTION

### PROBLEMS TO BE SOLVED BY THE INVENTION

As a humidity indicator detecting and indicating the humidity of air, a sheet-like member which changes color thereof in accordance with the humidity is known. In a case where the humidity of the air flowing through a flow path is externally indicated by this humidity indicator, a method in which a transparent cover is attached to the outside of the pipe guiding the air so as to cause the air flowing through the pipe to come into contact with the humidity indicator via communication holes formed in the pipe. However, the method of causing the air flowing through the pipe to come into contact with the humidity indicator via communication holes encounters such a problem that it is impossible to cause the air flowing through the pipe to sufficiently come into contact with the humidity indicator, and since it takes time to detect the humidity, the color does not change instantly in response to the humidity change. On the other hand, if the humidity indicator is disposed in a tubular flow path in the fitting, there is a possibility that the humidity indicator is displaced by the air flowing through the tubular flow path, and also a problem that the humidity indicator cannot be readily replaced.

### MEANS FOR SOLVING THE PROBLEMS

An object of the present invention is to provide a fitting capable of indicating the humidity of the air flowing through an inside thereof on the basis of its enhanced response.

A connection fitting according to claim 1 comprises: a fitting body in which a first fitting member is provided to one end portion to which one of the air guide members is attached and a second fitting member is provided to the other end portion to which the other of the air guide members is attached, the fitting body being formed with a guide flow path for guiding air flowing between the air guide members; a partition wall provided in the fitting body and partitioning the guide flow path into one end side flow path portion and the other end side flow path portion; a cover mounted on the outside of the fitting body and made of transparent material, the cover forming a humidity detection flow path causing one of the flow path portions and the other of the flow path portions to communicate with each other on the outside of the fitting body; and a humidity indicator arranged in the humidity detection flow path along a flow path of air entering from one of the flow path portions into the humidity detection flow path and flowing toward the other of the flow path portions, the humidity indicator changing color thereof in accordance with the humidity of the air flowing through the humidity detection flow path.

In the connection fitting according to the present invention, a protrusion is formed on the outside of the fitting body to form a gap for guiding the air between the humidity indicator and an outer surface of the fitting body. In the connection fitting according to the present invention, a spacer forming an air flow portion between the humidity indicator and an outer surface of the fitting body and holding the humidity indicator is attached to the outside of the fitting body. In the connection fitting according to the present invention, a cylindrical porous member made of porous material and having air permeability is disposed in the humidity detection flow path, the humidity indicator being disposed on the outside of the porous member. In the connection fitting according to the present invention, the porous member is a filter removing foreign substances such as oil from the air passing therethrough. In the connection fitting according to the present invention, a filter for removing foreign substances such as oil from the air is disposed in the guide flow path.

### EFFECTS OF THE INVENTION

In the present invention, air guide members such as tubes are respectively attached to the fitting members provided to both end portions of the connection fitting, a guide flow path allowing both air guide members to communicate to each other to guide the air, the guide flow path being partitioned by a partition member into two flow path portions, a humidity detection flow path communicating with the flow path portions through communication holes being formed by the fitting body and a transparent cover attached to the outside of the fitting body, and a humidity indicator being disposed in the humidity detection flow path. Therefore, the air flowing from one air guide member toward the other air guide member entirely flows into the humidity detection flow path from the flow path portion allocated on an upstream side, and in the humidity detection flow path, the air flows along the humidity indicator. After flowing along the humidity indicator, the air flows into the other air guide member from the flow path on a downstream side.

As described above, since the air flowing from one air guide member on the upstream side toward the other air guide member on the downstream side entirely flows into the humidity detection flow path to come into contact with the humidity indicator, the humidity of the air is quickly detected by the humidity indicator. The humidity indicator changes color thereof in accordance with the humidity or changes the color when the humidity reaches a certain level, and since the changed color is visually observed from the outside through the transparent cover, it is possible to readily recognize the humidity of the air.

### BRIEF DESCRIPTIONS OF THE DRAWINGS

FIG. 1 is a cross sectional view showing a connection fitting according to one embodiment of the present invention;
FIG. 2 is a cross sectional view of the connection fitting along a line 2-2 shown in FIG. 1;
FIG. 3 is a cross sectional view of the connection fitting along a line 3-3 shown in FIG. 1;
FIG. 4 is a cross sectional view of the connection fitting along a line 4-4 shown in FIG. 1;
FIG. 5 is a perspective view showing an external appearance of the connection fitting shown in FIGS. 1 to 4;
FIG. 6 is a perspective view showing a state where its cover is removed from the connection fitting;
FIG. 7 is a bottom perspective view showing the state shown in FIG. 6;
FIG. 8 is a perspective view showing a state where its cover and humidity indicator are removed from the connection fitting;
FIG. 9 is a bottom perspective view showing the state shown in FIG. 8;
FIG. 10 is a perspective view showing a connection fitting according to another embodiment of the present invention;
FIG. 11 is a partially cutaway front view of the connection fitting shown in FIG. 10;
FIG. 12 is a cross sectional view of the connection fitting along a line 12-12 shown in FIG. 11;
FIG. 13A is a perspective view showing a spacer shown in FIGS. 10 and 11;
FIG. 13B is a perspective view of the spacer seen from the opposite side of FIG. 13A;
FIG. 14 is a partially cutaway front view showing a connection fitting according to still another embodiment of the present invention;
FIG. 15 is a cross sectional view of the connection fitting along a line 15-15 shown in FIG. 14; and
FIG. 16 is a perspective view showing an external appearance of a connection fitting according to yet another embodiment of the present invention.

### BEST MODE FOR CARRYING OUT THE INVENTION

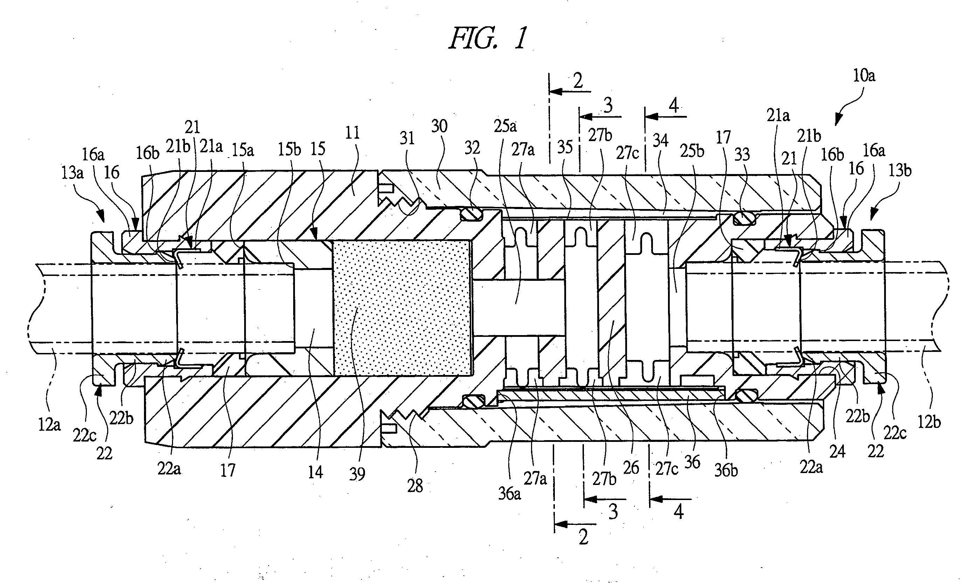

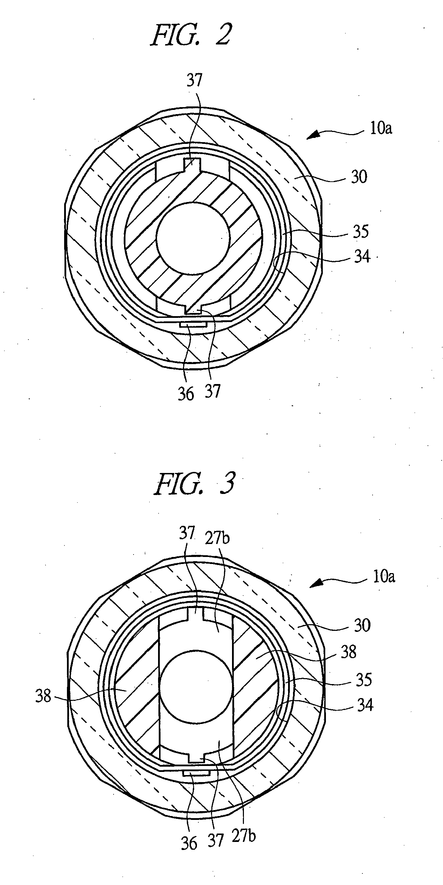

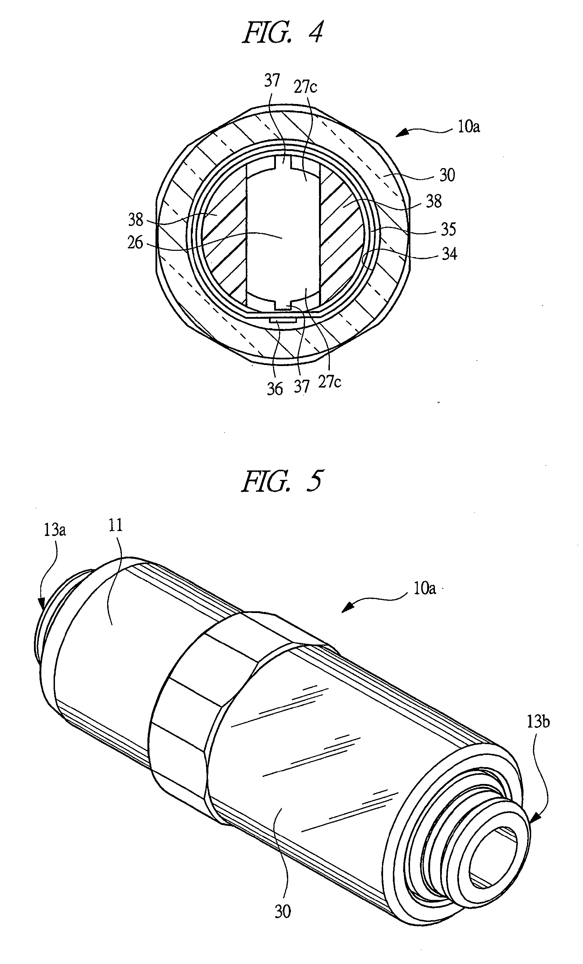

Hereinafter, embodiments of the present invention will be described in detail with reference to the drawings. A connection fitting 10a shown in FIGS. 1 to 9 includes a generally cylindrical stepped fitting body 11. A fitting member 13a to which a tube 12a as an air guide member is attached is provided to one end portion of the fitting body 11, and a fitting member 13b to which another tube 12b as an air guide member is attached is provided to the other end portion of the fitting body 11. As shown in FIG. 1, the fitting members 13a and 13b are provided to respective end portions of the fitting body 11, one is the first fitting member, and the other is the second fitting member. As shown in FIG. 1, in the fitting body 11, a guide flow path 14 for guiding the air is formed between both tubes 12a and 12b. Therefore, for example, in the case where one tube 12a is a primary side tube and the other tube 12b is a secondary side tube, compressed air guided by the primary side tube 12a is supplied to the secondary side tube 12b via the guide flow path 14 of the connection fitting 10a. However, the tube 12b may be a primary side tube and the compressed air may be supplied to the tube 12a as the secondary side tube.

As shown in FIG. 1, a cylindrical spacer 15 is fixed to the inside of one end portion of the fitting body 11. A guide ring 16 is inserted into one end portion of the fitting body 11, a flange portion 16a thereof is abutted on an end surface of the fitting body 11, and a seal member 17 is mounted between the guide ring 16 and the spacer 15. The seal member 17 seals the tube 12a which is inserted into the fitting member 13a so as to abut on a stopper 15b which is formed to the spacer 15 so as to face in a radial direction, so that it is possible to prevent the air from leaking from a gap between the tube 12a and the fitting member 13a.

A locking member 21 for removably fastening the tube 12a is fixed to an inner circumferential surface of the guide ring 16. This locking member 21 is made of metal material having elasticity such as stainless steel, and the locking member 21 includes a cylindrical portion 21a fitted with the inner surface of the guide ring 16, and a locking claw 21b bent radially inward in a direction from one end portion of this cylindrical portion 21a toward the other end portion of the fitting body 11. Therefore, when the tube 12a is inserted into it, the distal end of the locking claw 21b is elastically deformed so as to allow the movement of the tube 12a, so that the distal end surface of the tube 12a is abutted on the stopper 15b. On the other hand, when the tube 12a is pulled in a direction in which it is removed from the fitting body 11, the locking claw 21b is pushed against the tube 12a so as to bite into the tube 12a by the self locking effect of the locking claw 21b, so that the tube 12a is prevented from coming off.

A release ring 22 made of metal or hard resin is attached to one end portion of the fitting body 11 so as to be movable in the axial direction and so as to protrude from the guide ring 16. The release ring 22 includes a cylindrical portion 22b which is provided at its distal end with a claw activating end portion 22a so as to come into contact with the locking claw 21b, and a large-diameter operation part 22c provided at its rear end, the release ring 22 being assembled on the inside of the guide ring 16 of the fitting body 11 so as to be movable in the axial direction. Since the release ring 22 is prevented from coming free from the fitting body 11 by coming into contact with a stopper 16b formed to the guide ring 16, when the release ring 22 is pushed into it, the locking claw 21b is deformed elastically radially-outwardly so as to take a state in which the engagement between the locking claw 21b and the tube 12a is released. When the tube 12a is pulled in this state, it is possible to remove the tube 12a from the fitting body 11. As described above, the fitting member 13a is formed as a quick fitting which can be fastened to the tube 12a when the tube 12a is pushed into it and allows the tube 12a to be removed when the release ring 22 is pushed into it.

The fitting member 13b is provided in an attachment hole 24 formed to the other end portion of the fitting body 11. The fitting member 13b is a quick fitting and similar to the fitting member 13a. Therefore, members the same as those of the fitting member 13a are denoted by the same reference numbers as those of the fitting member 13a and the detail descriptions thereof are omitted here.

As shown in FIG. 1, the fitting body 11 is provided with a partition wall 26 for partitioning the guide flow path 14 guiding the air flowing between the tubes 12a and 12b into two flow path portions 25a and 25b which correspond to respective end sides of the fitting body 11. One flow path portion 25a opens on an outer circumferential surface of the fitting body 11 via communication holes 27a and 27b formed in the fitting body 11, and the other flow path portion 25b opens on an outer circumferential surface of the fitting body 11 via communication holes 27c formed in the fitting body. Two pairs of communication holes 27a and 27b are provided so that two communication holes of each pair are spaced from each other in a circumferential direction by 180 degrees and correspond to upper and lower parts in FIG. 1, so that the flow path portion 25a opens on the outer circumferential surface of the fitting body 11 via four communication holes in total. On the other hand, two communication holes 27c are provided so as to be located adjacent to the communication holes 27b in the axial direction and spaced from each other by 180 degrees. However, two communication holes may be formed in the fitting body 11 so as to communicate with the flow path portion 25a, four communication holes may be formed in the fitting body 11 so as to communicate with the flow path portion 25b, and it is possible to variously set the number of communication holes.

A cover 30 made of transparent material is attached to the outside of the fitting body 11. The cover 30 is formed into a generally cylindrical shape, and a female thread 31 is provided to one end portion of the fitting body 11 and screwed to a male thread 28 formed to the center portion in the axial direction of the fitting body 11. Seal members 32 and 33 are mounted on the center portion in the axial direction and the other end portion of the fitting body 11, and since the cover 30 is attached to the outside of the fitting body 11, a humidity detection flow path 34 sealed by the seal members 32 and 33 from the outside is formed between an inner circumferential surface of the cover 30 and an outer circumferential surface of the fitting body 11. This humidity detection flow path 34 communicates with the flow path portion 25a via the communication holes 27a and 27b and communicates with the flow path portion 25b via the communication holes 27c, so that the humidity detection flow path 34 causes the flow path portions 25a and 25b to communicate with each other on the outside of the fitting body 11. Therefore, an air flow path which causes the air guided by one tube 12a to flow into the flow path portion 25b via the communication holes 27c after flowing into the humidity detection flow path 34 from the flow path portion 25a via the communication holes 27a is formed in the humidity detection flow path 34.

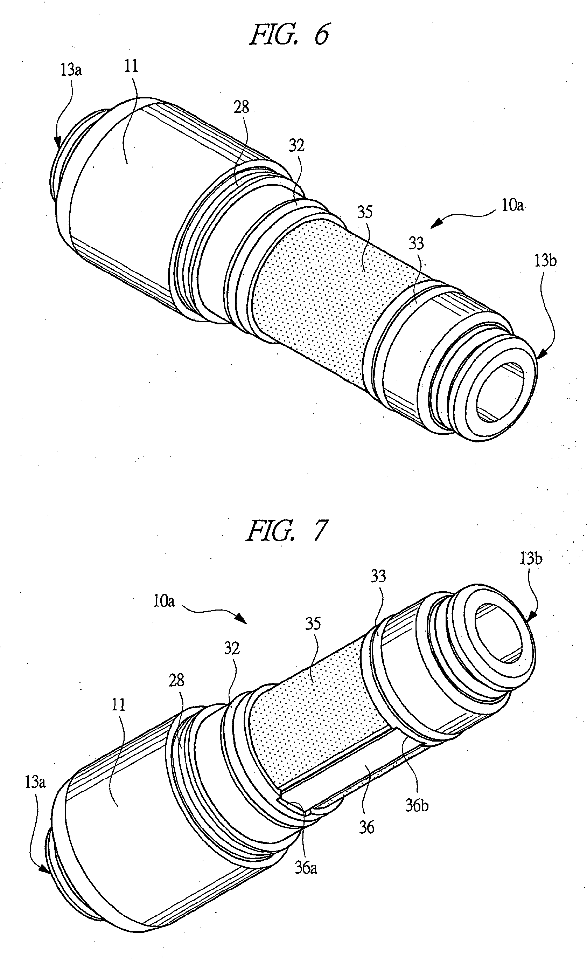

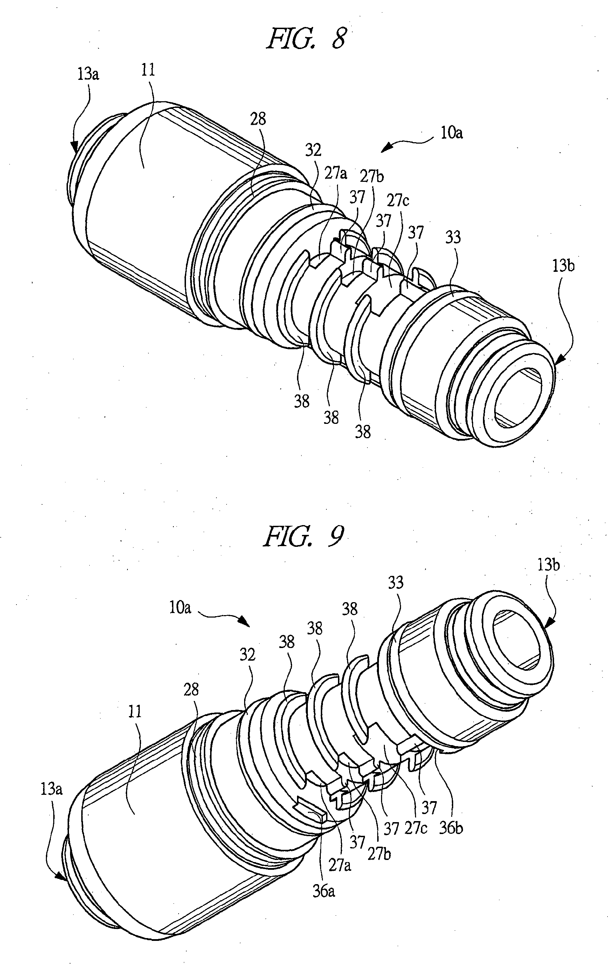

In the humidity detection flow path 34, a sheet-like humidity indicator 35 which changes color thereof in accordance with the humidity of the air flowing through the humidity detection flow path 34 is disposed so as to be wrapped around the fitting body 11 to cover its outer surface. To secure its wrapping ends, as shown in FIGS. 1 and 7, a clip plate 36 is attached to the fitting body 11. As shown in FIG. 9, the fitting body 11 is formed with concave portions 36a and 36b which are engaged with respective ends of the clip plate 36. As the humidity indicator 35, other than the humidity indicator which changes color thereof in accordance with the humidity of the air flowing through the humidity detection flow path 34, a humidity indicator which changes color thereof when the humidity exceeds a certain level or the like may be used.

To form a gap for guiding the air between the outer surface of the fitting body 11 and the humidity indicator 35, as shown in FIGS. 8 and 9, protrusions 37 protruding radially-outwardly from the outer circumferential surface of the fitting body 11 are provided between the communication holes 27a and 27b. Furthermore, on the outer circumferential surface of the fitting body 11, protrusions 38 protruding from the outer circumferential surface and extending in the circumferential direction are provided so as to correspond to the respective positions of the communication holes 27a to 27c. Therefore, the air flowed into the humidity detection flow path 34 from the flow path portion 25a via the communication holes 27a and 27b is guided by the protrusions 37 and 38 to flow in the circumferential direction while flowing along the inner surface of the humidity indicator 35. In this way, the air flowed into the flow path portion 25a from the primary side tube 12a entirely enters the humidity detection flow path 34, so that the air is blown to the entire humidity indicator 35.

The air flowed along the inner surface of the humidity indicator 35 flows into the secondary side tube 12b via the flow path portion 25b from the communication holes 27c. The air passed through the humidity indicator 35 is passed through the humidity indicator 35 on the communication holes 27c side again and then flows into the flow path portion 25b from the communication holes 27c. As described above, since the guide flow path 14 of the fitting body 11 is partitioned into two flow path portions 25a and 25b by the partition wall 26, the air flowed into the guide flow path 14 enters the humidity detection flow path 34 to come into contact with the humidity indicator 35. In this way, when the air starts to flow through the tubes 12a and 12b, the humidity indicator 35 immediately changes the color in accordance with the humidity of the air. Therefore it is possible to enhance the response of the humidity detection.

A filter 39 is located adjacent to the spacer 15 and fixed in the guide flow path 14 of the fitting body 11. Since this filter 39 is configured to remove foreign substances such as oil from the air, when the air flows from one tube 12a to the other tube 12b, the air passes through the filter 39. It is preferable to set the tube 12a as a primary side tube to cause the air cleaned of foreign substances by the filter 35 to come into contact with the humidity indicator 35. This filter 39 is made of porous material obtained by sintering powder particles so as to have permeability, so that the air is passed through pores but foreign substances are trapped. However, filters made of fiber materials may also be used as the filter 39.

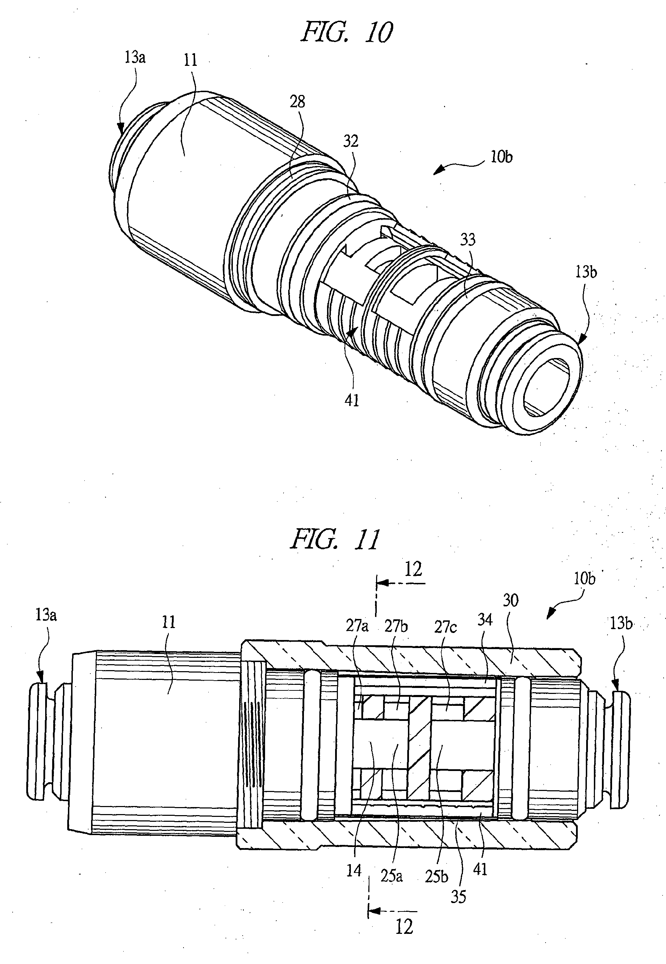

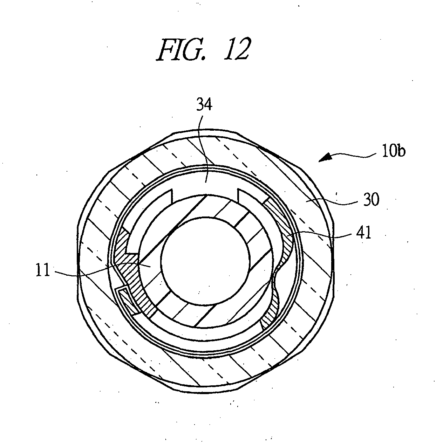

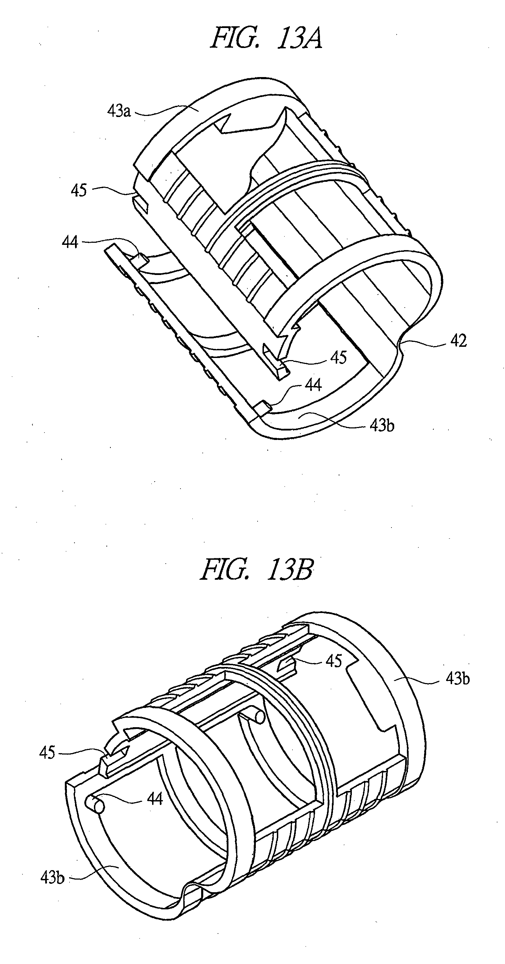

FIG. 10 is a perspective view showing a connection fitting 10b according to another embodiment of the present invention. FIG. 11 is a partially cutaway front view of the connection fitting 10b shown in FIG. 10. FIG. 12 is a cross sectional view of the connection fitting along a line 12-12 shown in FIG. 11. FIGS. 13A and 13B are perspective views each showing a spacer shown in FIG. 10.

While the fitting body 11 of the connection fitting 10a described above is provided with protrusions 37 and 38 so that a gap is formed between the inner surface of the humidity indicator 35 and the fitting body 11 by the protrusions 37 and 38, protrusions 37 and 38 are not provided on an outer circumferential surface corresponding to the cover 30 in the fitting body 11 of the connection fitting 10b shown in FIGS. 10 to 13 and a spacer 41 holding the humidity indicator 35 is assembled onto the outer circumferential surface. The spacer 41 is formed of resin and has substantially semicircular frames 43a and 43b which can be opened and closed via a thin hinge portion 42. As shown in FIG. 13A, one end portion of the sheet-like humidity indicator 35 is wrapped around an open end of one frame 43b. With the other end portion of the humidity indicator 35 overlapping with an open end of the other frame 43a, claw portions 44 provided to the open end of one frame 43a are engaged with respective engaging concave portions 45 provided to the other frame 43a, thereby attaching the humidity indicator 35 to the fitting body 11 via the spacer 41, so that the humidity indicator 35 is held on the fitting body 11 with a gap corresponding to the thickness of the spacer 41 being formed. In this way, since the humidity indicator 35 is held by using the spacer 41, an air guiding gap can be formed between the outer surface of the fitting body 11 and the humidity indicator 35 without protruding portions such as the protrusions 37 and 38 of the above-described connection fitting 10a. Therefore it is possible to enhance the response of the humidity detection. Furthermore, it is not necessary to have the clip plate 36 in the connection fitting 10a.

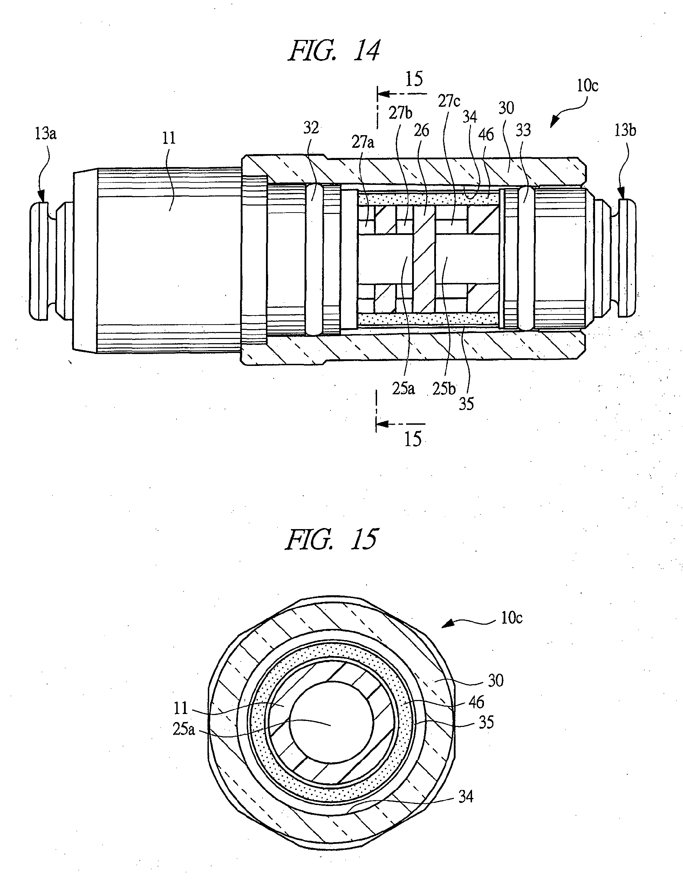

FIG. 14 is a partially cutaway front view showing a connection fitting 10c according to still another embodiment of the present invention and FIG. 15 is a cross sectional view of the connection fitting along a line 15-15 shown in FIG. 14.

As with the connection fitting 10b, this connection fitting 10c is not provided with protrusions 37 and 38 and the fitting body 11 has a flat outer circumferential surface on which each of the communication holes 27a to 27c opens. On the outer side of this outer circumferential surface, a cylindrical porous member 46 having high air permeability is disposed in the humidity detection flow path 34, and the humidity indicator 35 is disposed on its outside. In this way, since the porous member 46 and the humidity indicator 35 are disposed in the humidity detection flow path 34, an air guiding gap can be formed between the outer surface of the fitting body 11 without protruding portions as with the above-described connection fitting 10b, and it is possible to enhance the response of the humidity detection.

Furthermore, the porous member 46 may be a filter having a desired filter performance, and in this case, even if the tube 12b is disposed on the primary side, it is possible to cause the air obtained by the removal of foreign substances such as oil to come into contact with the humidity indicator 35. Therefore, when the porous member 46 is a filter having a filtering function, filters are respectively disposed on the inflow and the outflow side of the humidity detection flow path 34, so that there is no restriction on the direction of its airflow. And if there is a worry that dust is generated from the sheet-like humidity indicator 35 which is made of paper material or the like, after the air comes in contact with the humidity indicator 35, the air may be cleaned before being supplied to the secondary side.

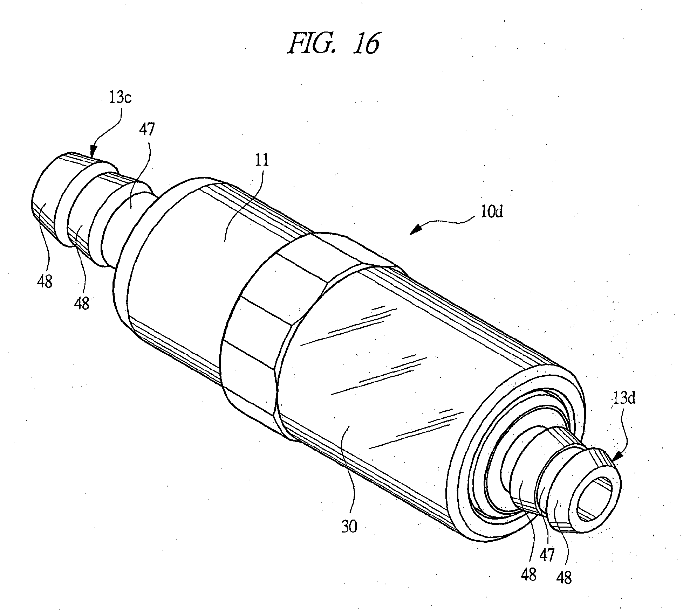

FIG. 16 is a perspective view showing a connection fitting 10d according to yet another embodiment of the present invention. This connection fitting 10d is provided with barb-type fittings as the fitting members 13c and 13d at both ends of the fitting body 11. In the fitting members 13c and 13d of this type, two annular engaging protrusions 48 are provided to each of hollow connection shafts 47 with which the tubes 12a and 12b are respectively fitted. The tubes 12a and 12b are respectively fitted with the outside of the annular engaging protrusions 48. In the connection fitting 10d having the fitting members of this type, any one of the internal configurations of the fitting body 11 described above may be used.

The present invention is not limited to the embodiments described above, and various modifications are possible without departing from the scope of the invention as defined by the claims. For example, as the fitting member provided to the fitting body, other than the quick fitting and the barb-type fitting, any fitting member may be used as long as it allows the tube to be removably attached as with the above-described clamp-type fitting and the like.

### INDUSTRIAL APPLICABILITY

The connection fitting of the present invention is applied to a pneumatic circuit for supplying compressed air to a pneumatically operated device such as a pneumatic cylinder.

## Claims

1. A connection fitting (10a, b, c, d) for connecting two air guide members 12a, 12b) to each other, comprising:
a fitting body (11) in which a first fitting member (13a) is provided to one end portion to which in use one of the air guide members (12a) is attached and a second fitting member (13b) is provided to the other end portion to which in use the other of the air guide members (12b) is attached, the fitting body (11) being formed with a guide flow path (14) for guiding air flowing between the air guide members (12a, 12b),
a partition wall (26) provided in the fitting body (11) and partitioning the guide flow path (14) into one end side flow path portion and the other end side flow path portion;
a cover (30) made of transparent material, the cover (30) having a through hole formed into a generally cylindrical shape in which the fitting body (11) is introduced, wherein a humidity detection flow path (34) causing one of the flow path portions and the other of the flow path portions to communicate with each other is formed between the cover (30) and the fitting body (11); and
a humidity indicator (35) arranged in the humidity detection flow path (34) so as to cover an outer surface of the fitting body (11), the humidity indicator (35) changing color thereof in accordance with the humidity of the air flowing through the humidity detection flow path (34).

2. The connection fitting according to claim 1, **characterized in that** a protrusion (37, 38) is formed on the outside of the fitting body (11) to form a gap for guiding the air between the humidity indicator (35) and an outer surface of the fitting body (11).

3. The connection fitting according to claim 1, **characterized in that** a spacer (41) forming an air flow portion between the humidity indicator (35) and an outer surface of the fitting body (11) and holding the humidity indicator (35) is attached to the outside of the fitting body (11).

4. The connection fitting according to claim 1, **characterized in that** a cylindrical porous member (46) made of porous material and having air permeability is disposed in the humidity detection flow path (34), the humidity indicator (35) being disposed on the outside of the porous member (46).

5. The connection fitting according to claim 4, **characterized in that** the porous member (46) is a filter removing foreign substances such as oil from the air passing there through.

6. The connection fitting according to any one of claims 1 to 5, **characterized in that** a filter (39) for removing foreign substances such as oil from the air is disposed in the guide flow path (14).

## Patentansprüche

1. Anschlussstück (10a, b, c, d), um zwei Luftleitelemente (12a, 12b) miteinander zu verbinden, umfassend:
einen Verbindungskörper (11), in dem an einem Endabschnitt, an dem bei Verwendung eines der Luftleitelemente (12a) angebracht ist, ein erstes Verbindungselement (13a) bereitgestellt ist, und an dem anderen Endabschnitt, an dem bei Verwendung das andere der Luftleitelemente (12b) angebracht ist, ein zweites Verbindungselement (13b) bereitgestellt ist, wobei der Verbindungskörper (11) mit einem Leitfließweg (14) ausgeführt ist, um Luft zwischen den Luftleitelementen (12a, 12b) fließen zu lassen,
eine Trennwand (26), die in dem Verbindungskörper (11) bereitgestellt ist und den Leitfließweg (14) in einen Fließwegabschnitt auf Seiten eines Endes und einen Fließwegabschnitt auf Seiten des anderen Endes teilt;
eine Abdeckung (30), die aus einem durchsichtigen Material gebildet ist, wobei die Abdeckung (30) eine zu einer im Allgemeinen zylindrischen Form ausgeführte Durchgangsöffnung aufweist, in die der Verbindungskörper (11) eingebracht ist, wobei zwischen der Abdeckung (30) und dem Verbindungskörper (11) ein Feuchtigkeitserkennungsfließweg (34) gebildet ist, der eine Kommunikation eines der Fließwegabschnitte und des anderen der Fließwegabschnitte miteinander herbeiführt; und
einen Feuchtigkeitsanzeiger (35), der so in dem Feuchtigkeitserkennungsfließweg (34) angeordnet ist, dass er eine Außenfläche des Verbindungskörpers (11) abdeckt, wobei der Feuchtigkeitsanzeiger (35) je nach der Feuchtigkeit der Luft, die durch den Feuchtigkeitserkennungsfließweg (34) fließt, seine Farbe verändert.

2. Anschlussstück nach Anspruch 1,
**dadurch gekennzeichnet, dass**
an der Außenseite des Verbindungskörpers (11) ein Vorsprung (37, 38) gebildet ist, um einen Spalt zum Leiten der Luft zwischen dem Feuchtigkeitsanzeiger (35) und einer Außenfläche des Verbindungskörpers (11) zu bilden.

3. Anschlussstück nach Anspruch 1,
**dadurch gekennzeichnet, dass**
an der Außenseite des Verbindungskörpers (11) ein Distanzstück (41), das zwischen dem Feuchtigkeitsanzeiger (35) und einer Außenfläche des Verbindungskörpers (11) einen Luftfließabschnitt bildet und den Feuchtigkeitsanzeiger (35) hält, angebracht ist.

4. Anschlussstück nach Anspruch 1,
**dadurch gekennzeichnet, dass**
in dem Feuchtigkeitserkennungsfließweg (34) ein zylinderförmiges poröses Element (46), das aus einem porösen Material besteht und über Luftdurchlässigkeit verfügt, angeordnet ist, wobei der Feuchtigkeitsanzeiger (35) an der Außenseite des porösen Elements (46) angeordnet ist.

5. Anschlussstück nach Anspruch 4,
**dadurch gekennzeichnet, dass**
das poröse Element (46) ein Filter ist, das Fremdstoffe wie etwa Öl aus der hindurch verlaufenden Luft beseitigt.

6. Anschlussstück nach einem der Ansprüche 1 bis 5,
**dadurch gekennzeichnet, dass**
in dem Leitfließweg (14) ein Filter (39) zur Beseitigung von Fremdstoffen wie etwa Öl aus der Luft angeordnet ist.

## Revendications

1. Raccord de connexion (10a, b, c, d) destiné à connecter deux éléments de guidage d'air (12a, 12b) l'un avec l'autre, comprenant :
un corps de raccord (11) dans lequel un premier élément de raccord (13a) est prévu à une première partie d'extrémité à laquelle en utilisation un premier des éléments de guidage d'air (12a) est fixé et un deuxième élément de raccord (13b) est prévu à l'autre partie d'extrémité à laquelle en utilisation l'autre des éléments de guidage d'air (12b) est fixé, le corps de raccord (11) étant formé avec un trajet d'écoulement de guidage (14) destiné à guider de l'air circulant entre les éléments de guidage d'air (12a, 12b),
une paroi de séparation (26) prévue dans le corps de raccord (11) et séparant le trajet d'écoulement de guidage (14) entre une première partie de trajet d'écoulement latéral d'extrémité et l'autre partie de trajet d'écoulement latéral d'extrémité,
une gaine protectrice (30) constituée d'un matériau transparent, la gaine protectrice (30) ayant un trou traversant formé suivant une forme globalement cylindrique dans lequel le corps de raccord (11) est introduit, dans lequel un trajet d'écoulement de détection d'humilité (34) amenant une première des parties de trajet d'écoulement et l'autre des parties de trajet d'écoulement à communiquer l'une avec l'autre est formé entre la gaine protectrice (30) et le corps de raccord (11), et
un indicateur d'humidité (35) disposé dans le trajet d'écoulement de détection d'humilité (34) de manière à couvrir une surface extérieure du corps de raccord (11), l'indicateur d'humilité (35) changeant de couleur en fonction de l'humidité de l'air circulant à travers le trajet d'écoulement de détection d'humidité (34).

2. Raccord de connexion selon la revendication 1,
**caractérisé en ce**
**qu'**une protubérance (37, 38) est formée sur l'extérieur du corps de raccord (11) pour former un espace pour guider l'air entre l'indicateur d'humidité (35) et une surface extérieure du corps de raccord (11).

3. Raccord de connexion selon la revendication 1,
**caractérisé en ce**
**qu'**un élément d'écartement (41) formant une partie d'écoulement d'air entre l'indicateur d'humidité (35) et une surface extérieure du corps de raccord (11) et supportant l'indicateur d'humidité (35) est fixé sur l'extérieur du corps de raccord (11).

4. Raccord de connexion selon la revendication 1,
**caractérisé en ce**
**qu'**un élément poreux cylindrique (46) constitué d'un matériau poreux et présentant une certaine perméabilité à l'air est disposé dans le trajet d'écoulement de détection d'humidité (34), l'indicateur d'humilité (35) étant disposé sur l'extérieur de l'élément poreux (46).

5. Raccord de connexion selon la revendication 4,
**caractérisé en ce**
**que** l'élément poreux (46) est un filtre retirant des substances étrangères telles que de l'huile de l'air le traversant.

6. Raccord de connexion selon l'une quelconque des revendications 1 à 5,
**caractérisé en ce**
**qu'**un filtre (39) retirant des substances étrangères telles que de l'huile de l'air est disposé dans le trajet d'écoulement de guidage (14).
